# EUROPEAN PATENT SPECIFICATION

(11) **EP 1 860 983 B1**
(45) Date of publication and mention of the grant of the patent: **13.10.2010**
(21) Application number: 06736851.4
(22) Date of filing: 03.03.2006
(51) Int. Cl.: A47L 13/58, A47L 13/51

(54) **BUCKET WITH AN INTERNAL PARTITION**
EIMER MIT INNERER TRENNWAND
SEAU A ELEMENT DE SEPARATION INTERIEUR

(30) Priority: 14.03.2005 GB 0505103
(43) Date of publication of application: 05.12.2007
(73) Proprietor: 3M Innovative Properties Company, St. Paul, MN 55133-3427 (US)
(72) Inventor: THORSTEINSSON, Sigurdur, I-20122 Milano (IT)
(74) Representative: Bergen, Katja
(86) International application number: PCT/US2006/007597
(87) International publication number: WO 2006/098898

(56) References cited:
- EP-A- 1 234 538
- EP-A- 1 382 535
- BR-U- 7 002 441
- DE-A1- 19 635 620
- DE-U1- 8 528 826
- GB-A- 107 722

## Description

The present invention relates to buckets of the type in which the interior is divided into one or more fluid compartments.

Buckets of that type are used, for example, to contain fluids for general cleaning purposes and are typically divided into two compartments that may be used in different ways. In one method of use, one of the compartments contains a cleaning fluid (for example, water to which a cleaning composition has been added) and the other contains a rinsing fluid (for example, water). A cleaning implement such as a cloth or the head of a mop is immersed in the cleaning fluid, wrung out, and then used to clean a surface such as a floor. It is then immersed in the rinsing fluid, wrung out, and used to rinse the previously-cleaned surface, following which the procedure is repeated to clean and rinse another part of the surface. In a second method of use, one of the compartments contains a cleaning fluid and the other compartment is used to collect the excess water that is wrung out of the cleaning implement. To that end, especially when the bucket is intended to be used in combination with a cleaning tool such as a mop, the second compartment may be provided with some form of mechanism for wringing out the head of the cleaning tool. Other methods of use of buckets that comprise two or more compartments are, of course, possible.

A bucket may be divided into compartments in various ways. For example, it may effectively comprise two or more separate containers that are joined together at the top of the bucket. Alternatively, the bucket may contain a partition that defines the various compartments, in which case the partition may be a permanent part of the bucket or it may be removable to enable the bucket to be used in a non-compartmented state if required.

EP-A-1 382 535 describes a bucket having a removable partition that divides the interior of the bucket into two compartments. The partition is a tight fit in a groove in the internal surface of the bucket, to prevent fluid leakage between the compartments. Levers are provided at the top corners of the partition which, when rotated, act on the rim of the bucket to raise the partition partly out of the bucket, and facilitate its removal.

The present invention is directed to the problem of providing a bucket having an internal partition that can be easily inserted into and removed from the bucket but is nevertheless able to define compartments within the bucket that are separated from each other in a fluid-tight manner. The invention is further concerned with providing a bucket of that type, which can be stacked efficiently for storage and transportation despite the presence of the partition. The invention is more especially, but not exclusively, concerned with buckets of the type that also comprise a wringer basket positioned on top of the bucket for wringing excess water from a cleaning utensil and draining the excess water into the bucket. In the case in which the wringer basket is intended for use with a cleaning tool having a handle, for example a mop, the invention is further concerned with the provision of a simple mechanism that will allow the cleaning tool to be left standing in the bucket (with or without the internal partition).

The present invention provides a bucket having at least one removable internal partition positioned to divide the bucket into at least two compartments, wherein a sealing member is provided along edges of the partition to engage the internal surface of the bucket and form a fluid-tight seal between the compartments.

The invention further provides a bucket having a removable internal partition that extends across the bucket to divide the bucket into at least two compartments, the partition having a curvature that corresponds to the curvature of part of the wall of the bucket so that the partition can stand against that part of the bucket wall when not being used to divide the bucket into compartments. A bucket of that type can be packaged with the partition stood neatly against the inside wall of the bucket, making it possible to stack the bucket almost as efficiently as if there were no partition.

In accordance with a further aspect, the present invention provides a bucket having a removable internal partition positioned to divide the bucket into at least two compartments, and a wringer basket positioned on the top of the bucket for wringing excess water from a cleaning implement and draining the excess water into the bucket, the wringer basket being releasably coupled to the partition and being removable from the bucket therewith. A bucket of that type can be readily adapted for different methods of use, namely with/without a wringer basket and with/without and internal partition.

In accordance with yet another aspect, the present invention provides a bucket for use with a cleaning implement having a head and a handle, the bucket having a wringer basket that is positioned on the top of the bucket for wringing excess water from the head of the cleaning implement and draining the excess water into the bucket, in which the wringer basket is at least partly surrounded by a platform by which the basket is supported on the bucket, and a retaining opening is formed in the platform for removably-retaining the handle of the cleaning implement when the head thereof is located in the bucket. The use of the wringer basket platform to provide a retaining opening for a cleaning tool handle provides an increased amount of choice in the shape and location of the retaining aperture, making it possible to provide an aperture that is both easily accessible and capable of holding the cleaning tool handle securely.

By way of example, a bucket in accordance with the invention will be described with reference to the accompanying drawings, in which:
Fig. 1 is an exploded perspective view of the bucket from towards a first end and above, showing the various components thereof;
Fig. 2 is a perspective view of the bucket in its assembled form, viewed from generally the same direction as in Fig. 1;
Fig. 3 shows the bucket in its assembled form, viewed from towards the other second end and above;
Fig. 4 is a side view of the bucket;
Fig. 5 is similar to Fig. 4 but shows the handle of the bucket in the raised position;
Fig. 6 is a view of the first end of the bucket;
Fig. 7 is a view of the second end of the bucket;
Fig. 8 is a view of the bottom of the bucket;
Fig. 9 shows the partition that forms a part of the bucket, as it would be seen from the first end of the bucket;
Fig. 10 shows the partition of Fig. 9 from above;
Fig. 11 is a cross-section on the line XI-XI of Fig. 10;
Fig. 12 is a diagrammatic cross-section of an edge of the partition of Figs. 9 to 11, showing the shape of a sealing gasket;
Fig. 13 shows the wringer component that forms a part of the bucket, as it would be seen from the first end of the bucket;
Fig. 14 shows a bucket configured for packaging;
Fig. 15 shows a bucket configured for packaging together with the component parts of a strip mop; and
Fig. 16 illustrates the formation of a stack using buckets as shown in Fig. 15.

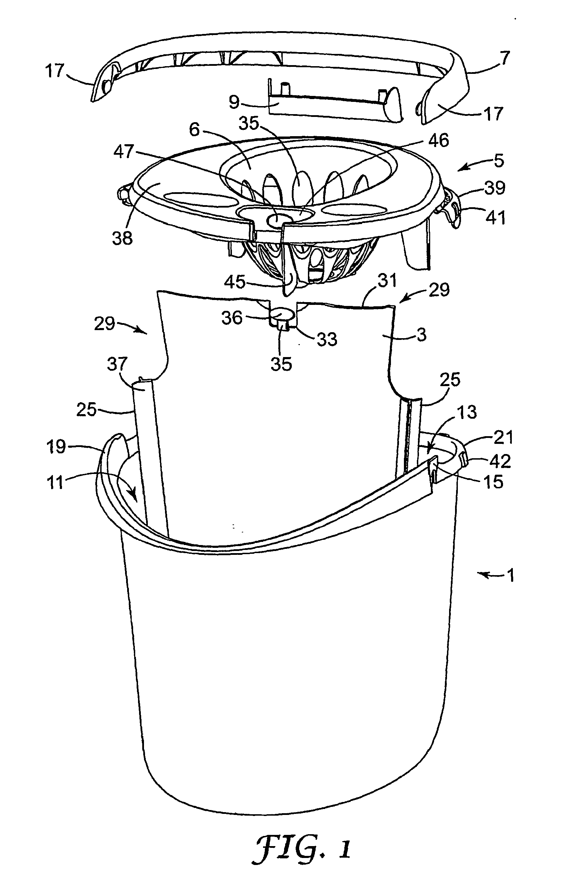

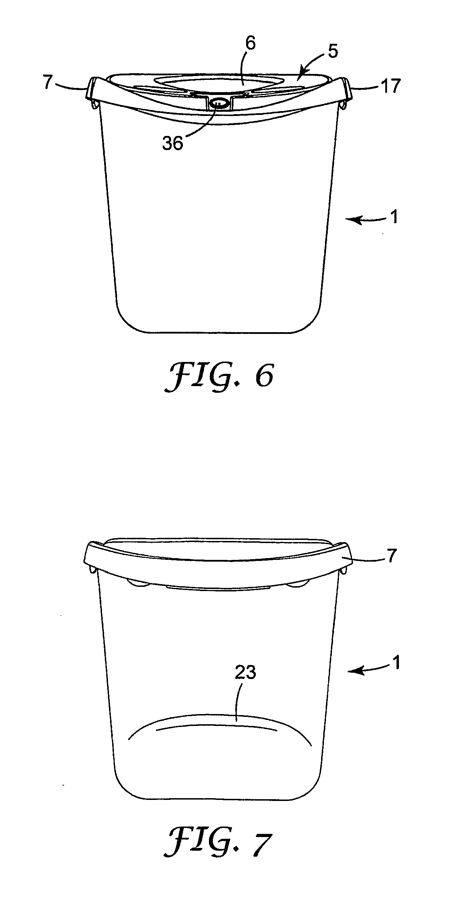

The bucket shown in the Figs. 1 to 8 comprises, in addition to the container 1 itself, a partition 3 that serves to divide the bucket into two compartments, and a wringer component 5 comprising a bowl-shaped wringer basket 6 for use in squeezing excess liquid out of the head of a mop (not shown). Those components are shown in Fig. 1 separated from the bucket, together with the bucket handle 7 and its hand grip 9.

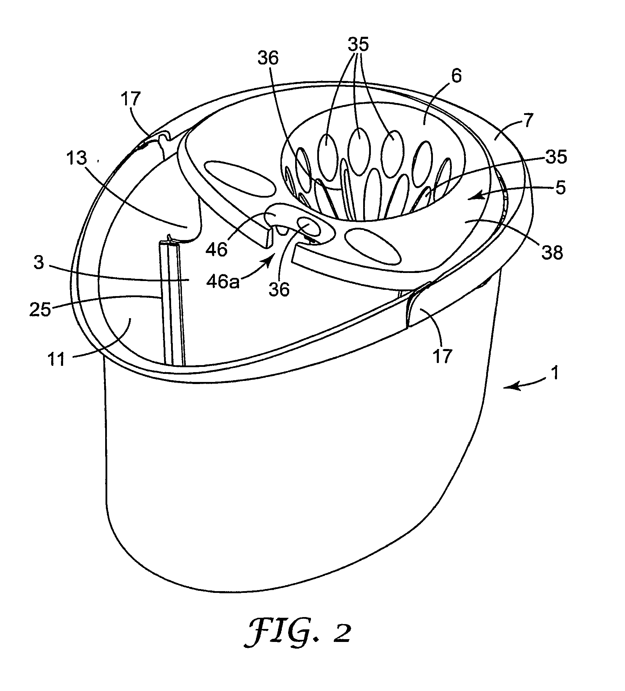

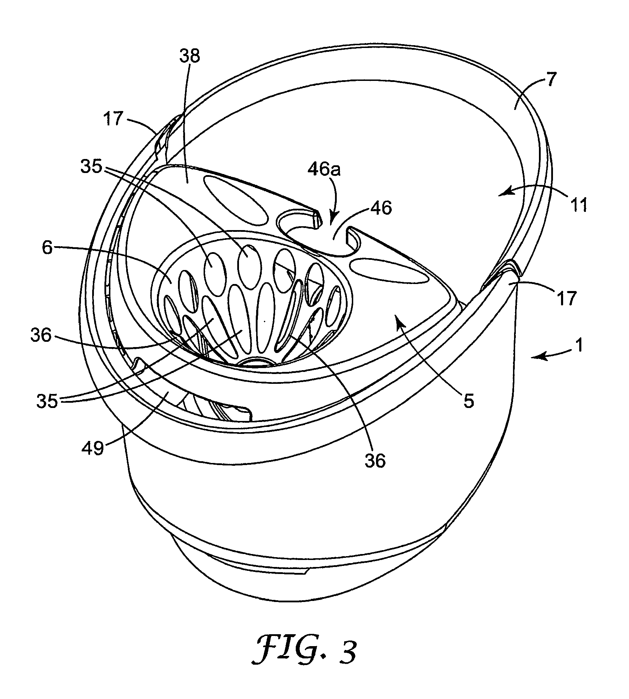

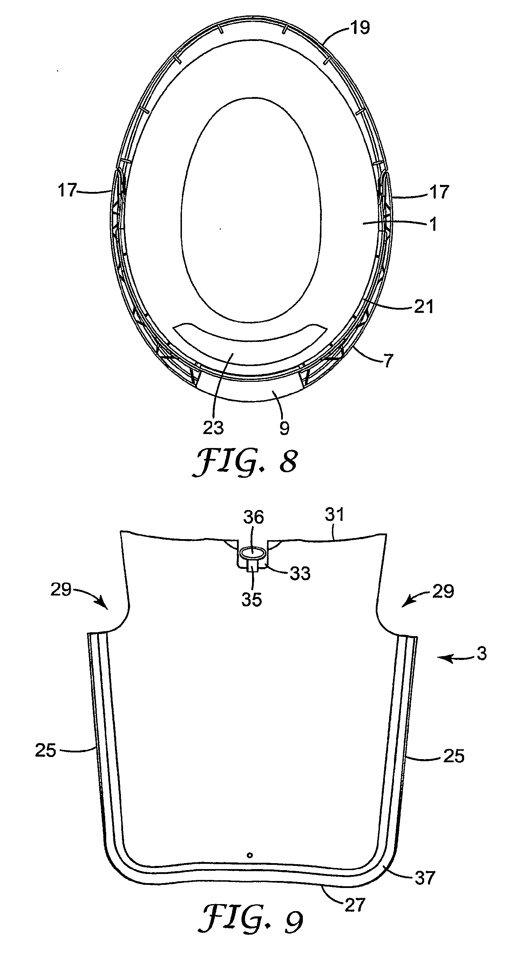

The bucket container 1 has a generally oval shape when viewed in plan (see Fig. 8). When the various components shown in Fig. 1 are assembled, the handle 7 (with its hand grip 9) is attached to the top of the bucket on opposite sides of the latter; the partition 3 is positioned across the middle of the bucket container 1, in the region of the handle attachment points, to divide the interior of the bucket into two substantially equi-sized compartments 11, 13; and the wringer component 5 is positioned over one of those compartments, specifically the compartment 13, as shown in Figs. 2 and 3.

The various components of the bucket, and the manner in which they are assembled will be described in greater detail below but the way in which the bucket is used will first be explained briefly. A required amount of cleaning fluid for a particular cleaning task is put into the compartment 11 that is not covered by the wringer component 5: typically, the cleaning fluid is water to which the user adds his/her preferred cleaning composition. The partition 3 substantially prevents the leakage of fluid from the compartment 11 into the compartment 13. The user then immerses the head of a mop in the cleaning fluid in the compartment 11 and removes the excess fluid by wringing out the mop head in the wringer basket 6, in known manner. In the present case, the shape of the wringer basket 6 assumes that the mop is some form of strip mop (that is, a mop having a head that is formed from a bundle of strips of an absorbent material such as those available under the trade designation "Scotch Brite" from 3M Company of St. Paul, Minnesota, USA). The mop is then used to clean a surface, typically a floor, following which the head is immersed again in the cleaning fluid, the dirt is rinsed out, and the process is repeated. As the cleaning operation progresses, the fluid in the compartment 11 becomes dirtier and also diminishes in volume as it is transferred to the compartment 13 during the wringing step and, to a lesser extent, to the surface that is being cleaned. If the cleaning operation is extensive, it may at some stage be necessary to replace or replenish the cleaning fluid in the compartment 11 and/or to remove fluid from the compartment 13. At the end of the cleaning operation, the fluid in both compartments 11,13 is discarded.

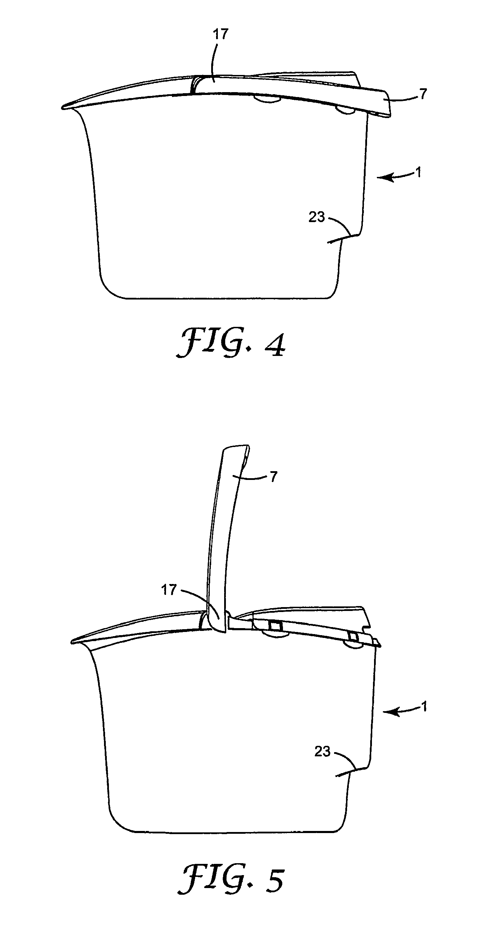

The bucket container 1 is moulded from any suitable plastic material, preferably a material that is capable of withstanding exposure to hot water and cleaning compositions. A suitable material is polypropylene. The bucket has attachment points 15 at the top, on both sides, for the ends 17 of the handle 7. The rim portion 19 around one half of the bucket at the front end, between the handle attachment points 15, stands up above the rim portion 21 around the other half of the bucket at the rear end and is curved to match the cross-section of the handle 7 so that, when the latter is attached to the bucket and moved to its downward position, it sits over the rim portion 21 and becomes an extension of the rim portion 19 as shown in Figs. 2 to 4. At the rear end of the bucket, the bucket wall is formed with an inward step 23 towards the base (see Figs. 4, 5 and 7) to provide a location at which, when the bucket is picked up by its handle, it can be held to be tipped up and emptied.

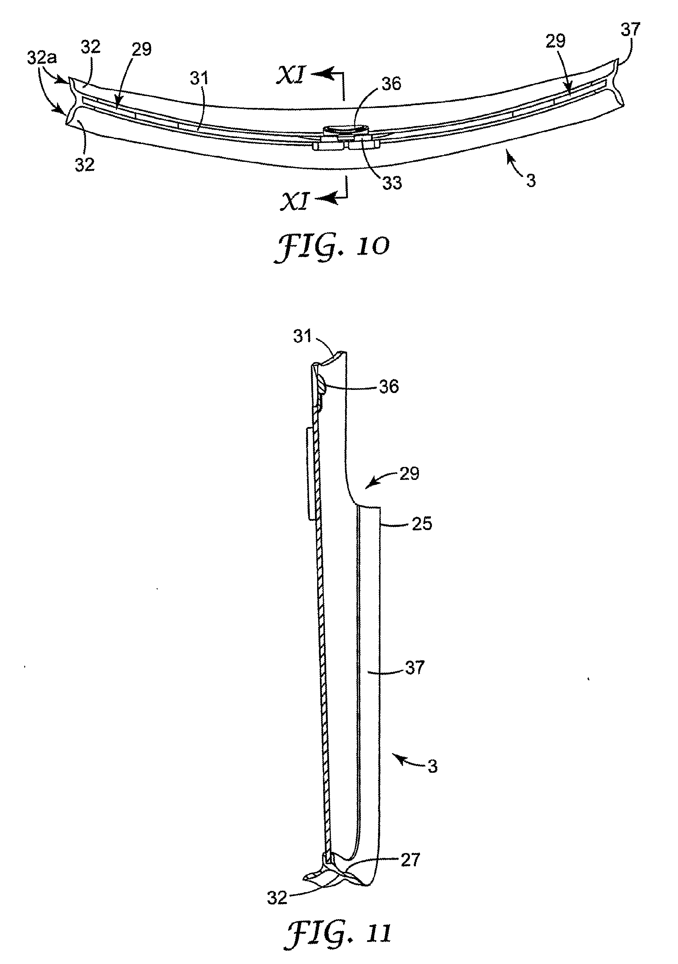

The partition 3, shown in Figs. 9 to 11, is a generally rectangular sheet that is also moulded from a suitable plastic material, typically the same material as that used for the bucket container 1. The periphery of the partition at its two side edges 25 and its bottom edge 27 corresponds to the shape of the interior of the bucket at its mid-plane in the region of the handle attachment points 15 except at the top where the side edges 25 are cut away from the internal surface of the bucket as indicated at 29, for a reason to be described below. The top edge 31 of the partition also has a cut-out portion 33 at its mid-point, in which is located a flexible tab 35 with an enlarged head 36, the purpose of which will also be described below. The partition has a slight curvature between the two side edges 25 (see Fig. 10), corresponding to the curvature of the sides of the bucket, so that the partition will stand neatly against one of the bucket sides for packaging purposes as will be described in greater detail below.

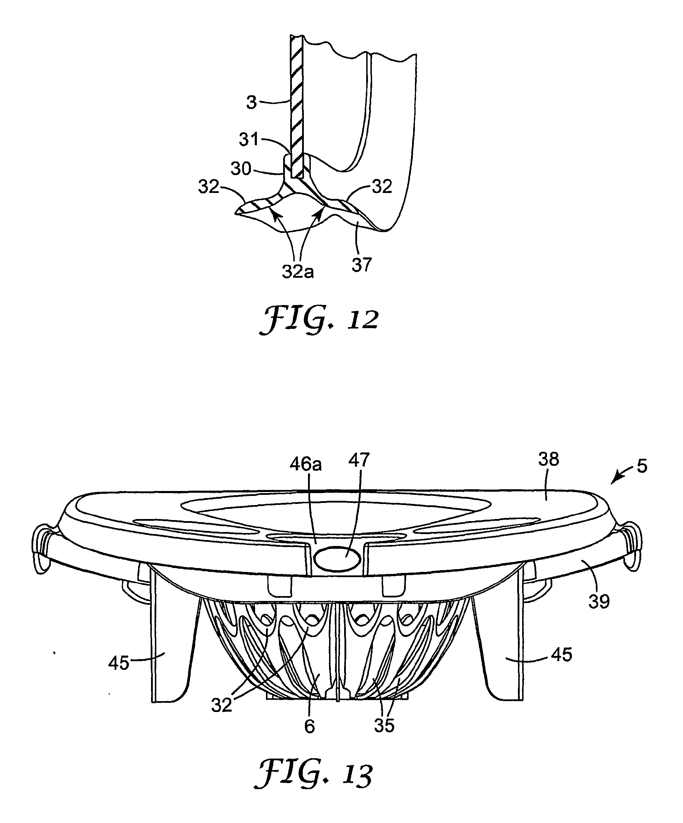

A sealing gasket 37 is located along the side and bottom edges 25, 27 of the partition 3, between the cut-away portions 29. The gasket has a constant, generally "Y"- shaped cross-section along its length, shown in Fig. 12, comprising a central leg portion 30 with a groove 31 in which the edge of the partition 3 is located and, extending away from the central portion, two diverging arm portions 32 which will move apart as necessary so that their facing surfaces 32a will contact and seal against the inner surface of the bucket when the partition is pushed into position from above. The gasket 37 may be secured to the partition 3 by an adhesive but is preferably molded in place when the partition is manufactured. The gasket may be formed from any suitable resilient material, capable of withstanding exposure to hot water and domestic cleaning compositions: it may, for example, be formed from an elastomeric material such as the thermoplastic elastomer available, under the trade name "Laprene" 83-545 (a styrenic block copolymer) from SO.F.TER. spa, of Forli, Italy.

The wringer basket 6 is a conventional bowl-shaped portion in the wringer component 5, in which the head of a strip mop is placed in order to have excess liquid squeezed out of the mop strips. That is typically accomplished by placing the head of the mop in the basket 6 and then applying a downward, twisting force to it through the mop handle. The liquid that is thereby squeezed out of the strips of the mop head passes through drainage apertures 35 in the wall of the basket 6 and is collected in the compartment 13 of the bucket container 1. The wringer basket 6 is intended particularly for use with a mop in which the strips are held in a triangular-shaped head (for example, a mop of the type described in UK patent application No. 04 04524.1, dated 1 March 2004, attorney reference 59572) and, with that in mind, three equi-spaced ribs 36 are formed on the inside of the bowl-shaped portion 6 to co-operate with the triangular mop head and impede rotation of the latter within the wringer basket, thereby enhancing the wringing action on the mop strips.

The wringer component 5 also comprises a platform 38 around the wringer basket 6, which serves to position the basket over the bucket compartment 13. To that end, the platform 38 is provided with turned-over edge portions 39 along two sections of its periphery that sit on the rim portion 21 of the bucket. Apertures 41 are provided in the edge portions 39 of the platform 21 to engage up-standing buttons 42 on the rim portion 21 of the bucket and hold the wringer basket in position. It will be apparent from Figs. 2 to 4 that the edge portions 39 of the wringer component, together with the apertures 41 and buttons 42, are hidden by the bucket handle 7 when the latter is in the lowered position. Three fins 45 on the outside of the wringer basket 6 serve to strengthen the latter and also assist in guiding the wringer basket into position on the bucket: one of those fins 45 is directed towards the front of the wringer basket and is intended to engage the surface of the partition 3 facing into the bucket compartment 13, and the other two are intended to engage the internal surface of the bucket container 1.

The platform 38 of the wringer component 5 overhangs the partition at the front of the wringer basket 6 and is provided, at the mid-point of this part of its periphery, with an opening 46 for removably-retaining the handle of a strip mop when the latter is left standing in the bucket compartment 11. The opening 46, which is generally elongated in the widthwise direction of the bucket and large enough to contain the mop handle, has an open mouth 46a through which the mop handle can be inserted into the opening. The width of the mouth 46a is substantially the same as the diameter of the mop handle so that the latter is a push-fit in the mouth 46a, thereby ensuring, when the handle has been pushed into the retaining opening 46, that it can not fall out and that the mop can safely be left unattended.

At the rear of the retaining opening 46 is an aperture 47 in which the enlarged head 36 of the flexible tab 35 on the partition 3 can engage to couple the partition and the wringer basket 6 together so that they can, if desired, be removed from the bucket container 1 together as an assembly: alternatively, by pushing the head 36 out of the aperture, the wringer basket 6 is uncoupled from the partition and can be removed on its own.

At the rear of the wringer basket 6, there is a gap 49 (see Fig. 3) between the two sections of turned-over edge portions 39 on the periphery of the platform 38 and between the adjacent part of the rim portion 21 of the bucket. That gap permits liquid to be poured out of the bucket compartment 13, effectively backwards out of the bucket. Liquid can, of course, also be poured out of the other (front) end of the bucket in the conventional manner and, in either case, the cut-away portions 29 at the top of the partition 3 allow liquid to pass from one of the bucket partitions to the other when the bucket is tipped up.

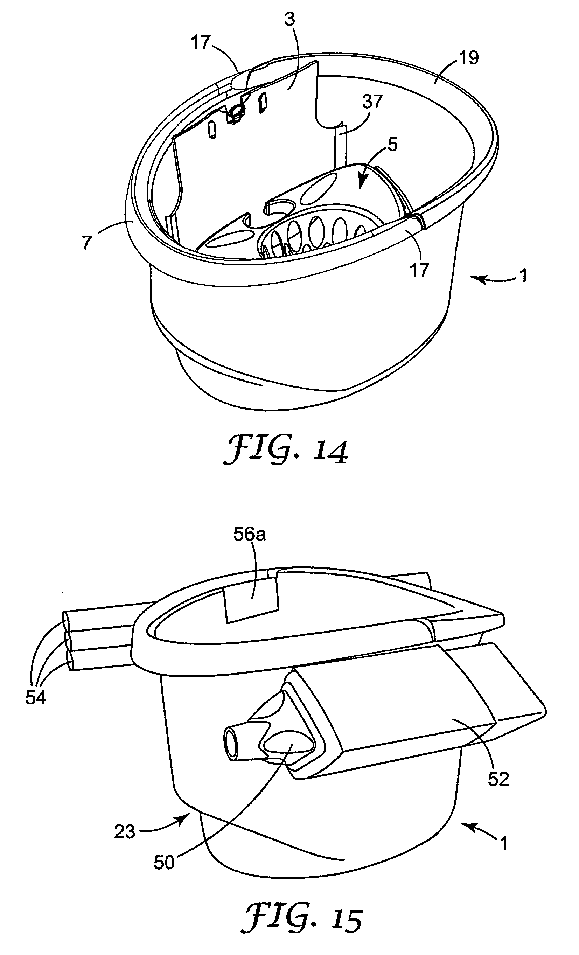

Despite the provision of the partition 3 and the wringer component 5, the bucket container 1 can be stacked efficiently for storage and transportation. This is assisted by the fact, mentioned above, that the partition 3 (when not being used to divide the bucket) can be stood neatly against the inside wall of the bucket as shown in Fig. 14. In that configuration, it is possible to stack a second bucket inside this one almost as efficiently as if there were no partition. Advantageously, the wringer component 5 is dimensioned so that, when removed from the bucket container 1, it can be placed in the bottom of the bucket as shown in Fig. 14 and occupy no more than the normal space between adjacent buckets in a stack.

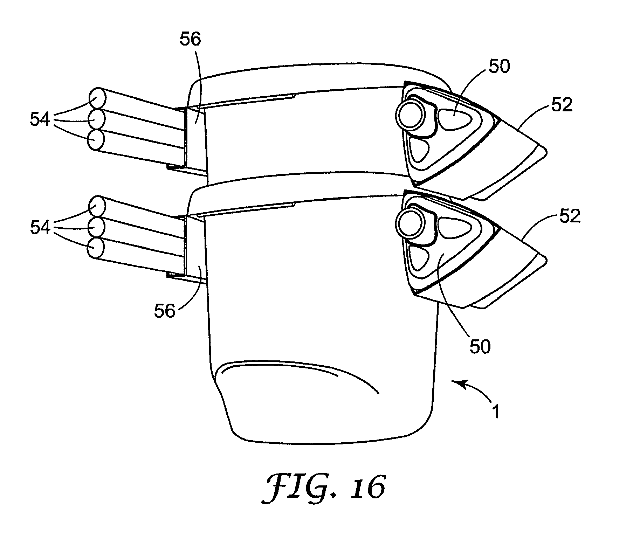

The bucket in its disassembled form (Fig. 14) can conveniently be packaged together with a disassembled mop as shown in Fig. 15. The mop is of the type described in our above-mentioned UK patent application No. 04 04524.1 and, as shown, the head 50 of the mop (including the mop strips which are inside the packaging and not visible) is suspended by its packaging 52 on one side of the bucket container 1 and the mop handle (separated into three lengths 54) is similarly suspended by its packaging on the other side. The packaging 56 of the handle components 54 is not visible in Fig. 15 but can be seen in Fig. 16, described below. Each packaging 52, 56 has a respective extension that passes over the rim portion 21 of the bucket container 1 and is held in place by the bucket handle 7, thereby suspending the mop components in the position shown. In Fig. 15, only the extension 56a of the packaging 56 is visible. A plurality of such bucket and mop packages can conveniently be stacked as shown in Fig. 16, it being understood that the bucket partitions 3 and wringer components 5 are located within the bucket containers 1 as shown in Fig.14 and are, consequently, not visible in either Fig. 15 or Fig. 16.

It will be seen from the above description that the partition 3 shown in Figs. 9 to 11 provides, by virtue of the sealing gasket 37, a particularly a simple and convenient way of dividing the interior of a bucket into two compartments. Two or more similar partitions could be used if it is desired to divide the interior of the bucket into a greater number of compartments: alternatively, a single partition having a more complex shape could be used for that purpose. For example a bucket with three compartments could be used to contain clean rinsing water in one compartment, water with detergent or other cleaning fluid in another compartment, and dirty water in the third compartment: by using two parallel partitions and positioning the detergent-containing compartment between the rinsing water and dirty water compartments, the two latter could be emptied and replenished without discarding the detergent in the central compartment. Alternatively, different types of cleaning fluid could be contained in two of the compartments, making the bucket suitable for different cleaning purposes, for instance one compartment could contain conventional detergent and another could contain one of the antibacterial or antimicrobial cleaning fluids that are now available for specific cleaning purposes.

The particular form of sealing gasket shown in Fig. 12 is not essential: any gasket capable of providing a fluid-tight seal between the edge of the partition and the internal surface of the bucket could be employed. For example, it is not essential that the sealing gasket should be configured for use with a bucket having a smooth internal wall, although such a configuration does offer the advantage of simplicity couple with a degree of flexibility regarding the actual location of the partition within the bucket. As an alternative, the sealing gasket (and if necessary the partition) could be configured for use with a bucket in which an internal surface is provided either with a recessed groove, or with upstanding ribs defining a channel, in which the partition is located: in that case, the sealing gasket could be arranged to seal against a surface or surfaces of the groove or channel. In the case of a bucket with a wholly curved internal wall, a single upstanding rib may be provided on the wall to prevent a partition from being dislodged. Surface features (such as grooves, channels or upstanding ribs) on the internal wall of the bucket may also be useful, especially when two or more partitions are used, to indicate the intended positions of the partitions.

The simple connection between the partition 3 and the wringer component 5 enables the user to adapt the bucket quickly and easily to any particular cleaning operation, and also enables the bucket components to be stored in a convenient manner. For example, if the bucket container 1 is to be used on its own, the partition 3 and wringer component 5 can be removed together. If the wringer component 5 is not required, it can be easily separated from the partition 3 while the latter remains in position within the bucket container 1. Finally, for storage, the wringer component 5 and partition 3 are removed from the bucket, separated, and replaced in the bucket in the space-saving arrangement shown in Fig. 14. It will be appreciated, however, that the connection between the partition 1 and the wringer component 5 can take any suitable form, and that the one described above (i.e. the tab 35 and aperture 47) is not essential.

The particular features of the wringer component 5, including the manner in which it is supported on the rim 21 of the bucket container 1; the external fins 45 on the basket 6; and the internal ribs 36 result in a sturdy construction that will function efficiently to remove excess liquid from the strips of a strip mop. The form and location of the retaining opening 46, in particular the restricted mouth 46a and the accessible central location of the opening in relation to the interior of the bucket container 1, makes it easy for a user to leave a mop standing unattended in the bucket during a cleaning operation. It will be appreciated, however, that an alternative arrangement could be used to retain the mop handle if desired.

## Claims

1. A bucket having a removable internal partition (3) that extends across the bucket to divide the bucket into at least two compartments (11, 13), **characterized in that** the partition has a curvature that corresponds to the curvature of part of the wall of the bucket so that the partition can stand against that part of the bucket wall when not being used to divide the bucket into compartments.

2. A bucket as claimed in claim 1, in which the bucket further comprises a wringer basket (6) positioned on the top of the bucket for wringing excess water from a cleaning implement and draining the excess water into the bucket, the wringer basket being releaseably-coupled to the partition whereby the basket is removable from the bucket with, and also without, the partition.

3. A bucket as claimed in claim 2, in which the wringer basket is at least partly surrounded by a platform (38) by which the basket is removably-supported on the bucket, and in which one of the partition/platform is provided with a resilient tab (35) and the other is provided with an aperture (47) in which the tab is releasably engaged to couple the basket to the partition.

4. A bucket as claimed in claim 3, for use with a cleaning implement having a head and a handle, in which a retaining opening (46) is formed in the platform for removably-retaining the handle of the cleaning implement when the head thereof is located in the bucket; the retaining opening having a mouth, through which the handle can be inserted into the retaining opening, that is positioned over a different bucket compartment to the wringer basket.

5. A bucket as claimed in claim 3 or claim 4, in which the platform of the wringer basket is shaped to releasably-engage the rim (21) of the bucket, and in which there is a gap (49) between the wringer basket/platform and the rim of the bucket, through which liquid can be emptied from the bucket.

6. A bucket as claimed in any one of the preceding claims, in which the partition has opposed side edges that are located adjacent the internal surface of side walls of the bucket and a bottom edge that is located adjacent the internal surface of the bottom of the bucket, a sealing member (37) being provided along edges of the partition to engage the internal surface of the bucket and form a fluid-tight seal between the compartments.

7. A bucket as claimed in claim 6, in which the sealing member has a generally "Y"-shaped cross-section and comprises a central leg portion (30) with a groove (31) in which the edge of the partition is located and, extending away from the central leg portion, two diverging resilient arm portions (32) that can move apart so that their facing surfaces contact and seal against the inner surface of the bucket.

8. A bucket as claimed in claim 6, in which the partition is cut away from the internal surface of the bucket towards the top thereof, to provide at least one opening (29) through which fluid can pass from one of the said compartments to another over the top of the partition.

9. A bucket as claimed in any one of the preceding claims, in which an inward step (23) is formed in the exterior of the bucket to provide a location at which the bucket can be held when it is being tipped up and emptied.

10. A bucket as claimed in any one of the preceding claims, the bucket having a handle (7) that, in its lowered position, forms a continuation of the rim (19) of the bucket.

## Patentansprüche

1. Eimer mit einer entfernbaren inneren Trennwand (3), die sich durch den Eimer erstreckt, um den Eimer in mindestens zwei Fächer (11, 13) zu unterteilen, **dadurch gekennzeichnet, dass** die Trennwand eine Krümmung hat, die der Krümmung eines Teils der Wand des Eimers entspricht, so dass die Trennwand an dem Teil der Eimerwand anliegen kann, wenn sie nicht dazu eingesetzt wird, um den Eimer in Fächer zu unterteilen.

2. Eimer nach Anspruch 1, wobei der Eimer ferner einen Auswringkorb (6) umfasst, der oben auf dem Eimer positioniert ist, um überschüssiges Wasser aus einem Reinigungsutensil auszuwringen und das überschüssige Wasser in den Eimer abzuführen, wobei der Auswringkorb lösbar an die Trennwand gekoppelt ist, wodurch der Korb aus dem Eimer mit und auch ohne die Trennwand entfernt werden kann.

3. Eimer nach Anspruch 2, wobei der Auswringkorb mindestens teilweise von einer Plattform (38) umgeben ist, durch die der Korb entfernbar auf den Eimer gestützt ist, und wobei entweder die Trennwand oder die Plattform mit einer federnden Lasche (35) und die jeweils andere mit einer Öffnung (47) versehen ist, in der die Lasche lösbar in Eingriff steht, um den Korb an die Trennwand zu koppeln.

4. Eimer nach Anspruch 3, für den Einsatz mit einem Reinigungsutensil mit einem Kopf und einem Griff, bei dem in der Plattform eine Halteöffnung (46) ausgebildet ist, um den Griff des Reinigungsutensils entfernbar zu halten, wenn sich sein Kopf im Eimer befindet, wobei die Halteöffnung eine Mündung hat, durch die der Griff in die Halteöffnung eingeführt werden kann, wobei die Mündung über einem anderen Eimerfach positioniert ist als der Auswringkorb.

5. Eimer nach Anspruch 3 oder 4, wobei die Plattform des Auswringkorbs so geformt ist, dass sie den Rand (21) des Eimers lösbar in Eingriff nimmt, und wobei zwischen dem Auswringkorb/der Plattform und dem Rand des Eimers ein Spalt (49) liegt, durch den hindurch Flüssigkeit aus dem Eimer ausgeleert werden kann.

6. Eimer nach einem der vorhergehenden Ansprüche, wobei die Trennwand gegenüberliegende Seitenkanten, die in der Nähe der Innenfläche von Seitenwänden des Eimers angeordnet sind, und eine Bodenkante hat, die in der Nähe der Innenfläche des Bodens des Eimers angeordnet ist, wobei ein Dichtungselement (37) entlang den Kanten der Trennwand vorgesehen ist, um die Innenfläche des Eimers in Eingriff zu nehmen und eine fluiddichte Dichtung zwischen den Fächern zu bilden.

7. Eimer nach Anspruch 6, wobei das Dichtungselement einen allgemein Y-förmigen Querschnitt hat und einen mittleren Schenkelabschnitt (30) mit einer Nut (31), in der die Kante der Trennwand angeordnet ist, und zwei auseinandergehende federnde Armabschnitte (32) umfasst, die sich vom mittleren Schenkelabschnitt weg erstrecken und sich auseinanderbewegen können, so dass ihre einander zugewandten Flächen die Innenfläche des Eimers kontaktieren und dagegen abdichten.

8. Eimer nach Anspruch 6, wobei die Trennwand zu ihrer Oberseite hin von der Innenfläche des Eimers weggeschnitten ist, um mindestens eine Öffnung (29) bereitzustellen, durch die Fluid über die Oberseite der Trennwand von einem der Fächer zum anderen fließen kann.

9. Eimer nach einem der vorhergehenden Ansprüche, wobei eine nach innen gehende Stufe (23) im Äußeren des Eimers gebildet ist, um für eine Stelle zu sorgen, an der der Eimer gehalten werden kann, wenn er gekippt und ausgeleert wird.

10. Eimer nach einem der vorhergehenden Ansprüche, wobei der Eimer einen Griff (7) hat, der in seiner abgesenkten Form eine Fortsetzung des Rands (19) des Eimers bildet.

## Revendications

1. Seau ayant une cloison interne amovible (3) qui s'étend en travers du seau pour diviser le seau en au moins deux compartiments (11, 13), **caractérisé en ce que** la cloison a une courbure qui correspond à la courbure d'une partie de la paroi du seau, de sorte que la cloison puisse être appuyée contre cette partie de la paroi du seau lorsqu'elle n'est pas utilisée aux fins de diviser le seau en compartiments.

2. Seau selon la revendication 1, dans lequel le seau comprend en outre un panier d'essorage (6) positionné sur le dessus du seau pour essorer l'excès d'eau d'un ustensile de nettoyage et pour drainer l'excès d'eau dans le seau, le panier d'essorage étant accouplé de manière amovible à la cloison, le panier pouvant être enlevé du seau avec, ou sans, la cloison.

3. Seau selon la revendication 2, dans lequel le panier d'essorage est au moins en partie entouré par une plate-forme (38) par laquelle le panier est supporté de manière amovible sur le seau, et dans lequel l'une de la cloison et la plate-forme est pourvue d'une languette élastique (35) et l'autre est pourvue d'une ouverture (47) dans laquelle la languette est engagée de manière amovible pour accoupler le panier à la cloison.

4. Seau selon la revendication 3, destiné à être utilisé avec un ustensile de nettoyage ayant une tête et un manche, dans lequel une ouverture de retenue (46) est formée dans la plate-forme pour retenir de manière amovible le manche de l'ustensile de nettoyage quand sa tête est placée dans le seau ; l'ouverture de retenue ayant une embouchure à travers laquelle le manche peut être inséré dans l'ouverture de retenue, et qui est positionnée par-dessus un compartiment du seau différent du panier d'essorage.

5. Seau selon la revendication 3 ou 4, dans lequel la plate-forme du panier d'essorage est formée de manière à s'engager de manière amovible avec le bord (21) du seau, et dans lequel il est prévu un espace (49) entre le panier d'essorage/la plate-forme et le bord du seau, à travers lequel le liquide peut être déversé hors du seau.

6. Seau selon l'une quelconque des revendications précédentes, dans lequel la cloison a des bords latéraux opposés qui sont situés à côté de la surface interne de parois latérales du seau, et un bord inférieur qui est situé à côté de la surface interne du fond du seau, un organe d'étanchéité (37) étant prévu le long de bords de la cloison pour s'engager avec la surface interne du seau et former un joint étanche aux fluides entre les compartiments.

7. Seau selon la revendication 6, dans lequel l'organe d'étanchéité a une section transversale en forme générale de Y et comprend une portion de branche centrale (30) avec une gorge (31) dans laquelle est situé le bord de la cloison et, s'étendant à l'écart de la portion de branche centrale, deux portions de bras élastiques divergentes (32) qui peuvent s'écarter de manière à ce que leurs surfaces en regard viennent en contact hermétiquement contre la surface interne du seau.

8. Seau selon la revendication 6, dans lequel la cloison est découpée de façon à être espacée par rapport à la surface interne du seau vers le haut de celui-ci afin de fournir au moins une ouverture (29) à travers laquelle du fluide peut passer depuis l'un desdits compartiments dans un autre par-dessus le haut de la cloison.

9. Seau selon l'une quelconque des revendications précédentes, dans lequel un échelon intérieur (23) est formé dans l'extérieur du seau pour fournir un emplacement au niveau duquel le seau peut être tenu lorsqu'il est basculé et vidé.

10. Seau selon l'une quelconque des revendications précédentes, le seau ayant une poignée (7) qui, dans sa position abaissée, forme une continuation du bord (19) du seau.
